Europäisches Patentamt

(19) **European Patent Office**

Office européen des brevets

(11) Publication number: **0 004 452**
A2

# (12) EUROPEAN PATENT APPLICATION

(21) Application number: 79300435.9

(22) Date of filing: 19.03.79

(51) Int. Cl.²: **B 65 G 47/26, B 65 G 13/07**

(30) Priority: 21.03.78 GB 1125578

(43) Date of publication of application: 03.10.79
Bulletin 79/20

(84) Designated Contracting States: DE FR IT NL SE

(71) Applicant: CONVEYOR MANUFACTURING COMPANY
LIMITED, Unit 3/4, Block D Woden Road West,
Wednesbury West Midlands, WS10 7SF (GB)

(72) Inventor: Pickett, Thomas, Tallis, South Crescent,
Windermere, Cumbria (GB)

(74) Representative: Attfield, Donald James et al,
BROOKES, MARTIN & WILSON Prudential Buildings 5
St. Philip's Place, Birmingham B3 2AF (GB)

(54) Roller conveyors.

(57) A roller conveyor is provided in which the rollers are driven by resilient drive belts looped about the rollers and a drive shaft that extends at right angles thereto. The tension in the drive belts is normally insufficient to transmit drive and tension is applied by a series of tensioning rollers extending parallel to the drive shaft and acting to apply pressure to respective groups of drive belts to produce driving tension therein. Each tensioning roller is supported on arms for pivotal movement away from its respective drive belts. Sensing rolls are located between rollers intermediate each group of drive belts and have a surface proud of the rollers surface. Each sensing roll includes an operating arm extending below and upstream of the rollers; an end portion of the operating arm acts against an arm of tensioning roller acting on the drive belts of the next but one group upstream to cause that tensioning roller to pivot away from the drive belts in response to pressure exerted on the sensing roll by a stationary package, thereby causing the associated rollers to stop and preventing further packages being forwarded thus avoiding an undesirable build up of pressure between upstream packages.

-1-
ROLLER CONVEYORS

The present invention relates to improvements in roller conveyor systems and is particularly concerned with the avoidance of problems encountered when packages being conveyed are stopped, for example at the end of a conveyor resulting in succeeding packages colliding with each other and forming an undesirable compression thereof.

Accordingly the present invention provides a roller conveyor comprising a frame, a plurality of freely rotatable rollers carried by said frame to define a pass line, a drive shaft extending adjacent and at an angle to the axes of the said rollers; resilient drive belts looped about at least a proportion of said rollers and said drive shaft, the tension in said drive belts being normally insufficient to transmit drive from the drive shaft to the rollers; a plurality of tensioning means pivotally mounted adjacent said drive shaft, each said means being arranged, in one position to apply pressure to a plurality of said drive belts, to impart sufficient tension thereto to enable drive to be transmitted from the drive shaft to the said rollers; each said tensioning means being movable between said one position and a second position in which no pressure is applied to the said drive belts; movement between the first said position and the second said position being effected by an operating member having a first end portion located in said pass line and proud of the surface of the rollers and a second end portion arranged to move said tensioning member from the first said position to the second said position in response to pressure on said operating member first end portion, said tensioning member returning to the first said position upon release of pressure on said operating member first end portion.

Each tensioning member may conveniently be in the form of a continuous rod or freely rotatable roller mounted on a shaft which shaft is pivotally mounted at each end thereof and arranged to apply pressure to a plurality of drive belts, or in the form of a plurality of jockey pulleys carried by arms attached to a continuous element pivotally mounted at each end thereof.

Preferably the first said arm portion of said operating member includes a freely rotatable roll having its surface proud of the surface of said rollers.

In the most preferred embodiment of the present invention each said tensioning member acts against a group of not more than six drive belts arranged to drive adjacent the rollers.

One embodiment of the invention will now be described with reference to the accompanying drawings in which:

Figure 1 is a diagrammatic representation of a side elevation of a section of a conveyor including the present invention; and

Figure 2 is a representation across the line B-B of Figure 1.

In the drawings, a conveyor comprises a series of groups of freely rotatable rollers generally indicated at 1, 2, 3 and 4 mounted for free rotation in frame members 11 (only one shown) each group of rollers consisting of six rollers, e.g. 2a, 2b ...2f and 3a, 3b ... 3f.

A drive shaft 10 driven by conventional means (not shown) runs the length of the conveyor at right angles to the rollers and is located to the left hand side of the frame when viewed in the direction of a pass line defined by the rollers and indicated by arrow A.

Resilient drive belts 20a 20b .... 20e and 30a ..... 30e are looped around the drive shaft and each adjacent roller. Each said belt runs in a groove 12 provided in each respective roller and acts directly on the surface of the drive shaft being free to move there along to take up an equilibrium position when under tension. The end roller of each group, e.g. 2f and 3f are driven by tensioned drive belts 20f and 30f looped around the next adjacent roller in the group i.e. 2e and 3e respectively. Inherent tension in the drive belts is insufficient for them to transfer drive between the drive shaft and the rollers.

Drive belt tensioning arms 13, 14, 15 are mounted on corresponding shafts 23, 24 and 25 for free rotation thereon. End portions 26, 27 and 28 and 29 and 31 of shafts 23, 24 and 25 are formed at right angles to the respective shafts and pivotally mounted on pins 33, 34 and 35, and 36 and 37 respectively. Each said pin is position towards the end of the arm portion remote from the shaft such that the weight of the tensioning arms causes it to bear against the drive belts and impart thereto sufficient tension for the said belts to transmit drive from the drive shaft to the respective rollers.

Ends 26, 28 and 31 include portions 39, 40 and 41 parallel to the respective shafts.

Positioned between each series of rollers are sensing rolls 50, 51 and 52 having surfaces normally lying proud of the surface of the rollers, the said sensing roll being mounted for free rotation on shafts 53, 54 and 55. The projecting ends of shafts 53, 54 and 55 are cranked to provide supporting arms 60 61 and 62 respectively (left hand side only shown) which are pivotally mounted on transverse rods 63, 64 and 65. The said left hand arms 60, 61 and 62 are cranked at the pivot point to form operating arms 66, 67 and 68 respectively. End portions of operating arms 67, and 68 are cranked to form portions 69 and 70 that bear against end portions 39 and 40 of shafts 23 and 24.

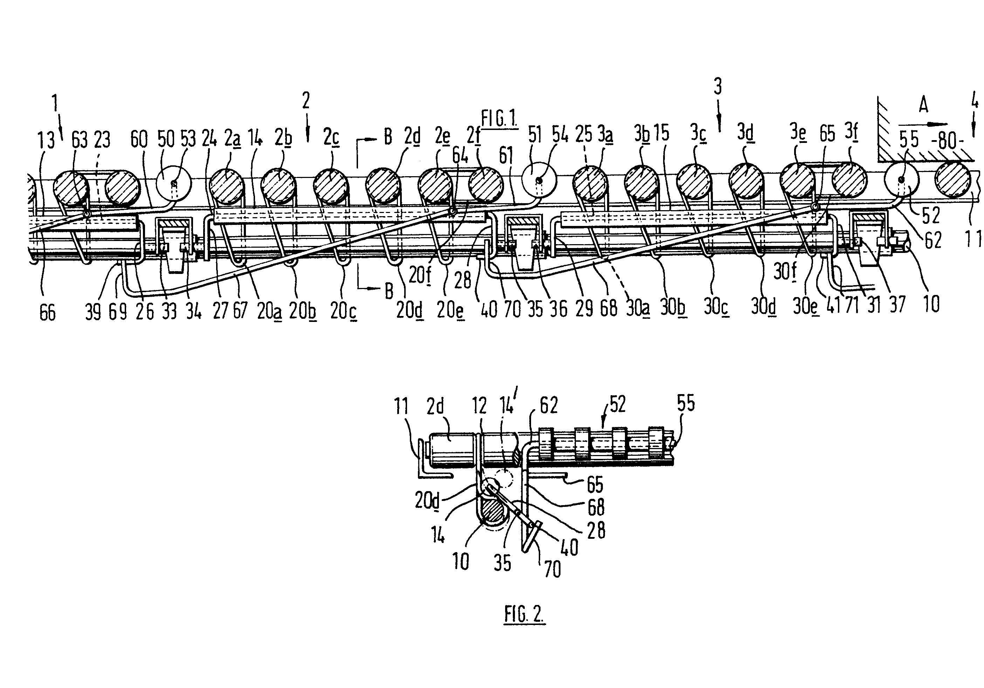

Under normal operating conditions and in the absence of packages, the tensioning arms bear against the respective drive belts and the weight of the said arms is sufficient to tension the said drive belts and enable them to transmit drive from the drive shaft to the respective rollers, (as shown particularl in Figure 2). However when a package e.g. package 80 in Figure 1 passes over a sensing roll 52 in Figure 1 the pressure exerted on that roll causes its supporting arm to pivot about rod 65 such that it takes up a position substantially flush with the surface of the rollers. As a result the operating arm 68 and end portion 70 move upwardly, the upward movement of arm portion 70 in turn brings pressure to bear on the portion 40 of shaft 24 causing arm 28 to pivot about pin 35 and move the tensioned arm 14 inwardly and away from the drive belts 20a...20e i.e. to the position 14' shown in dotted outline in Figure 2. The tension is thereby released from the drive belts, slippage occurs between the belts and the drive shaft and drive is no longer transmitted to the rollers of group 2 with the result that the rollers become stationary. As soon as package 80 moves forward from the position shown in Figure 1, the pressure on sensing roll 52 is removed and the weight of the tensioning arm 14 causes arm 28 to pivot about pin 35, tension is again applied to the drive belts and drive transmitted to the rollers. At the same time sensing roll 52 is restored to its normal position under the influence of the weight of the operating arm 68 and the pressure exerted by portion 40 of shaft 24 on end portion 70 of opeating arm 68.

It is to be observed that the pressure on a sensing roll results in the next but one group of rollers upstream being halted. Thus should package 80 be held stationary in the position shown in Figure 1, then because the rollers of group 2 are stationary further packages will not be forwarded onto the rollers in group 3 and undesirable pressure between packages will be avoided. It is also quite apparent that once one package has stopped then succeeding packages will, ultimately, come to rest over other upstream sensing rolls and bring further sections of the conveyor to a halt. As a result the suceeding packages, i.e. those following the first packages held stationary will be halted in a spaced-apart relationship. As soon as package 80 is enable to move forward, downstream groups of rollers again start forwarding packages along the conveyor releasing pressure from other sensing rolls in turn and enabling the system to operate normally, with packages maintaining the spaced-apart relationship as each section of the conveyor restarts.

Claims: -1- 0004452

1. A roller conveyor comrpising a frame (11), a plurality of freely rotatable rollers (2a-3b) carried by said frame to define a pass line (A), a drive shaft (10) extending adjacent and at an angle to the axes of the said rollers; resilient drive belts (20a-30b) looped about at least a proportion of said rollers and said drive shaft, the tension in said drive belts being normally insufficient to transmit drive from the drive shaft to the rollers; a plurality of tensioning means (13, 14, 15) pivotally mounted adjacent said drive shaft, each said means being arranged, in one position, to apply pressure to a plurality of said drive belts to impart sufficient tension thereto to enable drive to be transmitted from the drive shaft to the said rollers; each said tensioning means being movable between said one position and a second position in which no pressure is applied to the said drive belts; movement between the first said position and the second said position being effected by an operating member (66, 67 68) having a first end portion (50, 51, 52) located in said pass line and proud of the surface of the rollers and a second end portion (69, 70, 71) arranged to move said tensioning member from the first said position to the second said position in response to pressure on said operating member first end portion, said tensioning member returning to the first said position upon release of pressure on said operating member first end portion.

2. A conveyor according to claim 1 wherein each said tensioning means comprises a freely rotatable roll located parallel to the said drive shaft, pivotally mounted at each end thereof and arranged, when in said one position to apply pressure to a plurality of drive belts.

3. A conveyor according to claim 1 or claim 2 wherein said first end portion of said operating member includes a freely rotatable roll (50, 51 52) mounted parallel to the said rollers and having a surface proud of the surface of the said rollers.

4.    A conveyor according to any one of claims 1 to 3 wherein each said tensioning means acts against a group of not more than six said drive belts.

5.    A conveyor according to claim 3 wherein the said operating member includes two arm portions (60, 61 and 62) one end of each said arm portion acting to support said roll and being mounted on pivotal means (63, 64 and 65) for movement of said arms in the vertical plane, said second portion being formed by the other end of one of said arm portions (69, 70, 71); said tensioning means being located on support elements (27, 28, 29, 11) pivotally mounted to permit movement of the tensioning means from said one position and said second position; said other end of said arm portion being cranked and acting against one of said support elements to cause said tensioning means to move from said one position to said second position in response to pressure on said roll causing said arm portion to pivot about said pivot means.

FIG.1.

FIG. 2.

1/1

00004452